# EUROPEAN PATENT APPLICATION

(11) **EP 2 020 467 A1**
(43) Date of publication of application: **04.02.2009**
(21) Application number: 07425501.9
(22) Date of filing: 02.08.2007
(51) Int. Cl.: E04F 10/02, F24J 2/52

(54) **Outdoor awning with panels for using solar energy**

(71) Applicant: Corradi S.r.l., 40128 Bologna (IT)
(72) Inventor: Grazioso, Luca, 64020 Teramo, Frazione Sant`Atto (IT)
(74) Representative: Alagem Modiano, Lara S.

(57) **Abstract**

An outdoor awning with panels for using solar energy, comprising a fixed supporting structure (2) for a plurality of cross-members (3) which can move longitudinally along guides formed within the fixed structure (2) in order to open and close the awning (1); each cross-member (3) is rigidly connected to the lower face of a canopy (4). The canopy (4) comprises a plurality of transverse portions (4a), each of which is delimited by a pair of consecutive cross-members (3) and is associated with a plurality of panels (5) which are exposed to sunlight in order to receive the radiation and convert it into energy of another kind. The awning (1) comprises areas of discontinuity, on each transverse portion (4a), so as to mutually space the panels (5) in order to allow the folding of the canopy (4); the upper face of the canopy (4), with the awning (1) in the open configuration, allows the draining of rainwater along preset directions.

## Description

The present invention relates to an outdoor awning with panels for using solar energy.

Outdoor structures, such as pergolas and awnings, have evolved rapidly in recent years according to two main lines of development, allowing consumers to find on the market products which are increasingly ready to meet their requirements.

On the one hand, simple use as coverings against the sun has gradually been complemented by other functions, such as those which allow to make the awning slide so as to move it from the normal condition for use, in which it is extended, to an inactive condition, in which it is fully folded, for example during winter, in order to protect it against bad weather.

Products are also known which are capable of providing valid protections against the rain and in some cases against snow (and the associated load).

At the same time, a second line of development has kept alive research into the materials and shapes which offer the product aesthetic characteristics of high quality, causing pergolas and awnings to become valuable furnishing items.

Within this aim, and in particular in relation to the search for ever new uses, there are already-known awnings on which elements are applied which can store solar energy and then convert it into electrical or thermal power to be transferred in a "clean", nonpolluting manner to a user device.

Since such elements are constituted typically by panels which are mutually rigidly connected and are often large, due to the need to offer an extensive surface to the rays of the sun, in order to receive the maximum amount of energy the structures which incorporate this additional function do not allow convenient sliding of the awning and become a particular source of inconvenience in case of rain, because the inability to provide channels and gutters causes rainwater to drip laterally without control.

The aim of the present invention is to solve the above described problems, by providing an outdoor awning with panels for using solar energy in which the function of recovering and converting solar energy does not compromise the possibility to provide effective conveyance of rainwater within suitable channels or gutters.

Within this aim, an object of the invention is to provide an awning which despite the presence of panels for recovering solar energy, ensures that it is possible to fold said awning in a practical manner when the covering function is not required and solar energy recovery is not possible, such as for example during winter months.

Another object of the invention is to provide an awning which ensures high reliability in operation.

Another object of the invention is to provide an awning which can be obtained easily starting from commonly commercially available elements and materials.

Another object of the invention is to provide an awning which has a low cost, is relatively simple to provide in practice, and is safe in application.

This aim and these objects, as well as others which will become better apparent hereinafter, are achieved by an outdoor awning with panels for using solar energy, which comprises a fixed supporting structure for a plurality of cross-members which can move longitudinally along guides formed within said fixed structure in order to open and close the awning, each of said cross-members being rigidly connected to the lower face of a canopy, characterized in that said canopy comprises a plurality of transverse portions, each of said transverse portions being delimited by a pair of said consecutive cross-members and being associated with a plurality of panels which are exposed to sunlight in order to receive the radiation and convert it into energy of another kind, said awning comprising areas of discontinuity, on each of said transverse portions, so as to mutually space said panels in order to allow the folding of said canopy, the upper face of said canopy, with said awning in the open configuration, allowing the draining of rainwater along preset directions.

Further characteristics and advantages of the invention will become better apparent from the following detailed description of a preferred but not exclusive embodiment of an awning according to the invention, illustrated by way of non-limiting example in the accompanying drawings, wherein:

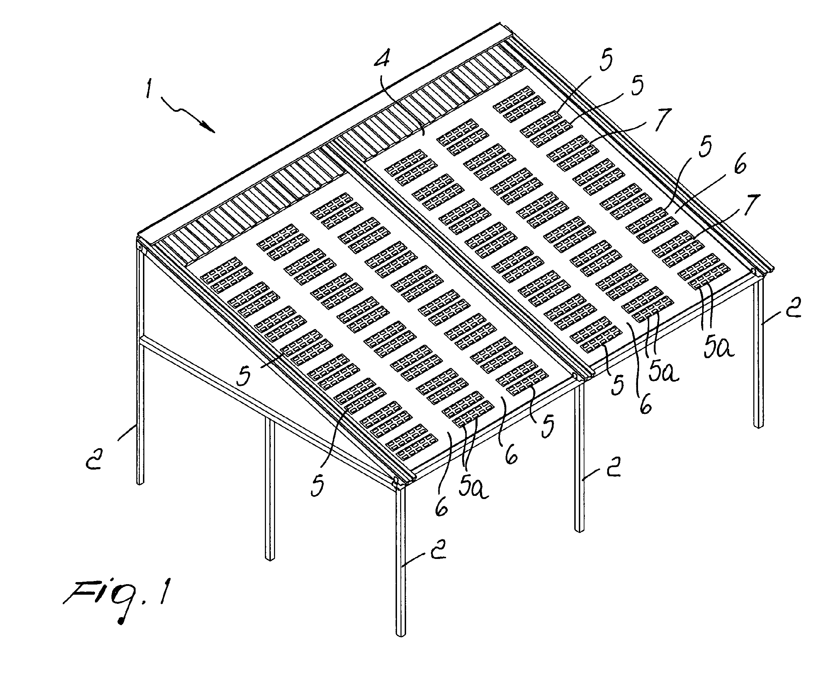

Figure 1 is a schematic perspective view of the awning according to the invention, in the configuration in which the canopy is extended;

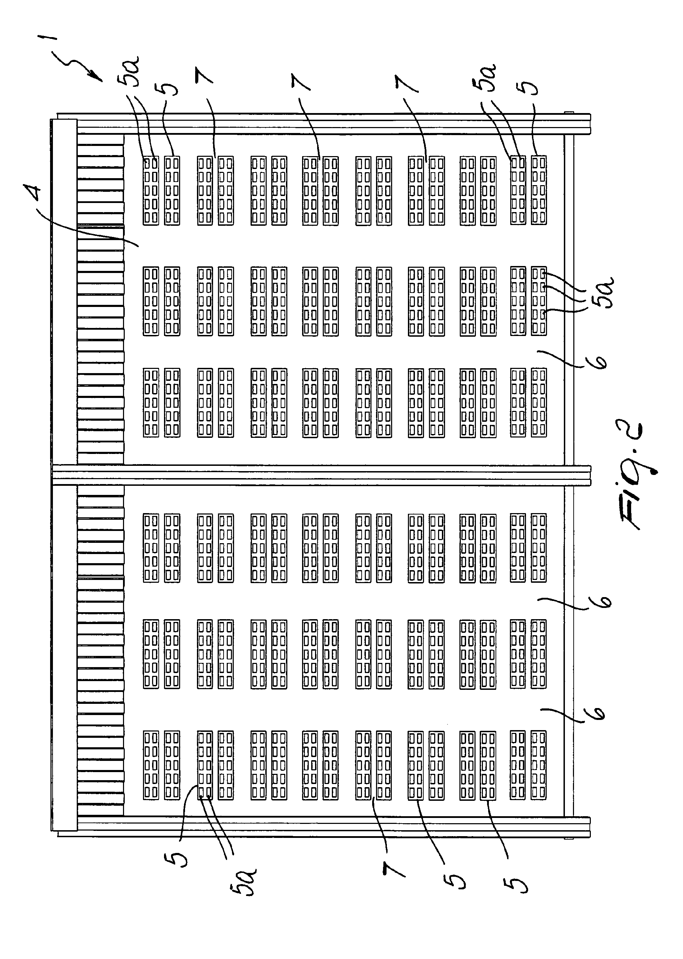

Figure 2 is a top view of the awning according to the invention, in the configuration in which the canopy is extended;

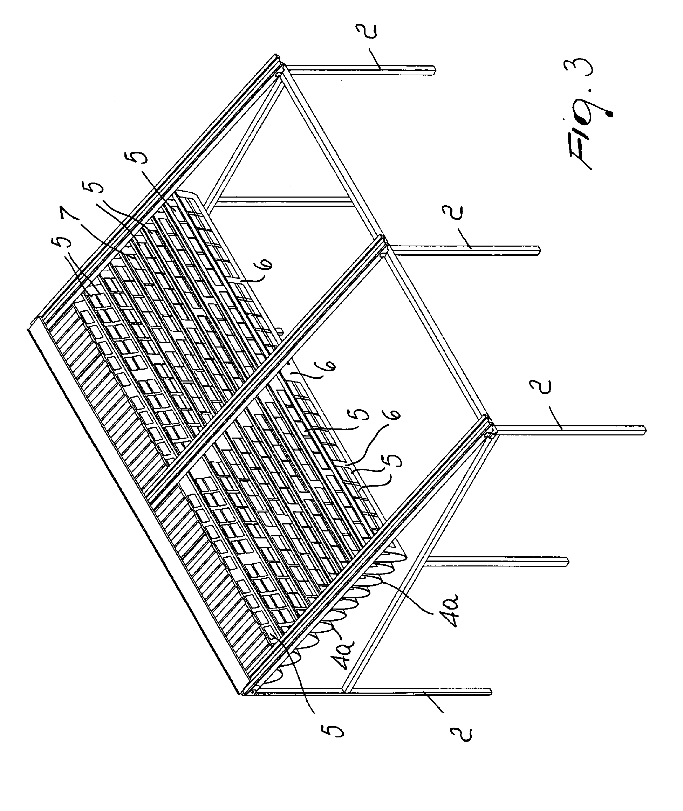

Figure 3 is a schematic perspective view of the awning according to the invention, in the configuration in which the canopy is folded;

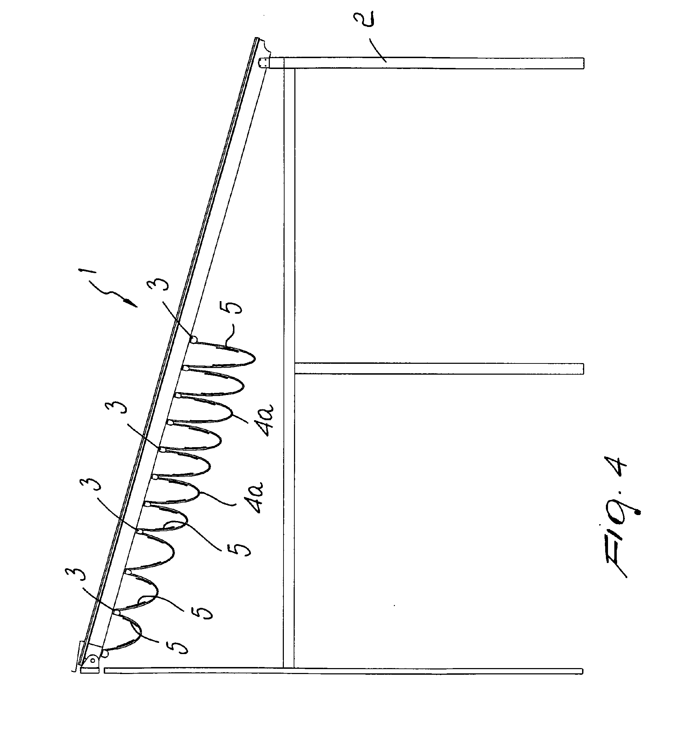

Figure 4 is a side view of the awning according to the invention, in the configuration in which the canopy is folded;

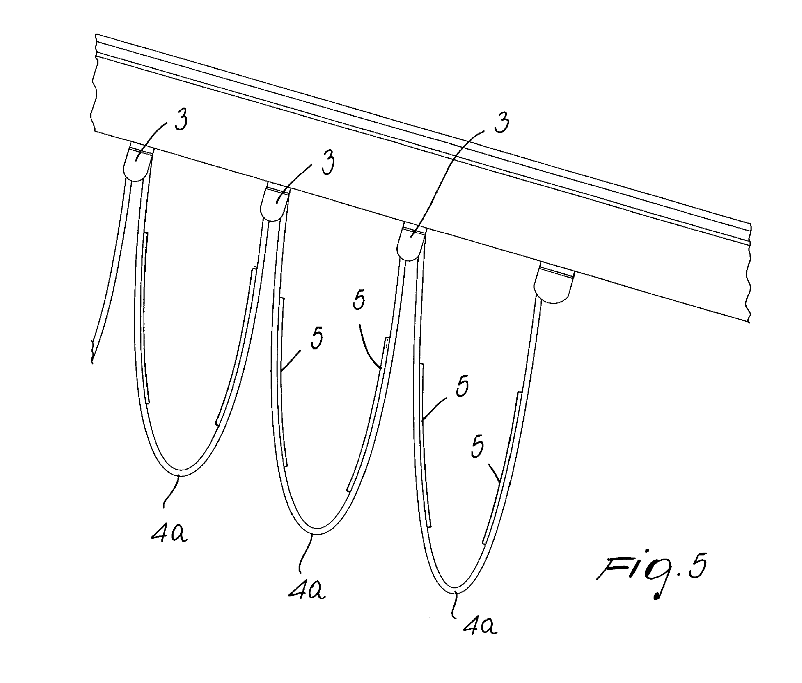

Figure 5 is an enlarged-scale view of a detail of Figure 4.

With reference to the figures, an awning according to the invention, generally designated by the reference numeral 1, comprises a fixed supporting structure 2 for a plurality of cross-members 3, which can move in a longitudinal direction along guides formed within the fixed structure 2 in order to open and close the awning 1. Each cross-member 3 in turn is connected rigidly to the lower face of a canopy 4, for example by means of a plurality of ribs, which are inserted within respective flaps of fabric which are rigidly coupled to the canopy 4 (sewn or bonded with adhesive or by heat-sealing), so that each rib mates with a seat formed along the cross-members 3.

With reference to what has been described above, and in particular to the means that allow the sliding and folding of the canopy, this same Applicant is the owner of patent IT1299972, which discloses in detail a possible embodiment which is suitable for the application of the present invention.

According to the invention, each pair of consecutive cross-members 3 delimits a transverse portion 4a of the canopy 4, each of which is associated with a plurality of panels 5 which are directly exposed to sunlight in order to be able to convert the received solar energy, linked to radiation and/or illumination, into another form. The awning 1 according to the invention comprises, on each transverse portion 4a, areas of discontinuity in order to mutually space the panels 5 so that it is possible to fold the canopy 4, while on the upper face of the canopy 4, when the awning 1 according to the invention is arranged in the open configuration, the draining of rainwater can occur along preset directions.

In particular, as shown in the accompanying figures, in each transverse portion 4a the panels 5, which are mutually aligned along at least two transverse rows and are arranged substantially so as to cover in an upper region the canopy 4, are mutually spaced so as to form longitudinal passages 6 which constitute a channel for draining rainwater, and transverse gaps 7, which constitute the areas of discontinuity and along which each transverse portion 4a can fold in order to close the awning 1 according to the invention.

According to an alternative embodiment, the canopy 4 is thicker than the panels 5, so that said panels can be incorporated within the canopy 4 while maintaining the upper surface of the panels 5 coplanar to the upper face of the canopy 4, so as to ensure the chosen exposure of the panels 5 to sunlight.

The awning 1 according to the invention can also comprise a deformable sheet-like element, such as for example a plastic sheet, to be applied as a covering for the canopy 4 and the panels 5, which is at least partially transparent in order to allow the passage of solar radiation.

Conveniently, each panel 5 comprises, according to an embodiment of particular interest in practice and in application, a photovoltaic module which is capable of converting, by means of the photovoltaic effect, the solar energy received in the form of light radiation into electric power to be transferred, as described in greater detail hereinafter, to a different user device.

In particular, each photovoltaic module comprises, according to a possible embodiment referenced by way of non-limiting example, a variety of photovoltaic cells 5a, for example ten, as in the accompanying figures, which are mutually electrically connected in series or in parallel and are encapsulated between a rear supporting surface, made of insulating material, and a plate made of transparent material, preferably glass, in order to allow the passage of light, and provided with a frame which allows its anchoring to the canopy 4.

As is known, the photovoltaic effect occurs whenever a photon having sufficient energy strikes a semiconductor material; in this case, a pair of electric charges becomes available to conduct electricity, and the generation of electric current is achieved by doping the semiconductor material, allowing to obtain the chosen difference in potential by placing in contact two layers of the semiconductor material doped with two suitable types of impurity.

More particularly, therefore, each photovoltaic cell 5a comprises a double layer of semiconductor material, which is connected electrically, by means of an external conductor, to a load, which can be powered by the energy thus produced.

The semiconductor material, which is a fundamental component of the photovoltaic cell 5a, is normally but not exclusively monocrystalline silicon, manufactured by the electronics industry and characterized by a high degree of purity.

The semiconductor material can also be constituted, when particular purity of the material is not required, by polycrystalline silicon, obtained by melting the waste of the electronics industry.

The double layer of semiconductor material affected by the photovoltaic effect described above can also be constituted by a very thin film of semiconductor material, preferably amorphous silicon, the use of which makes the panel 5 deformable and therefore capable of following perfectly the folds that form on each transverse portion 4a of the canopy 4 during the sliding of the canopy 4 in order to close the awning 1.

Advantageously, whatever the semiconductor material chosen, all the modules of each transverse portion 4a are mutually connected electrically so as to form a photovoltaic generator, which can be connected to an electric load to be powered, for example for lighting and delivering electric power to other user devices that are present in the dwelling or more simply in the region underneath the awning 1, at the same time equipping the system thus provided with a battery for managing the excess load, to be reused when sunlight is not available.

The photovoltaic generator can also be connected to the electric distribution grid; in this manner, by means of the interposition of an inverter to convert the current from DC to AC, it is possible to transfer the electric power produced by the generator to the power supply grid. In this case, this solution has great incentives offered by currently applicable statutory provisions, which have incorporated the indications established in this regard by the Kyoto protocol.

As an alternative to the use of the photovoltaic effect, the panels 5 can be constituted by thermal solar panels, which are capable of receiving solar energy transmitted by radiation by the sun in order to convert it into heat energy to be transferred to a different user element, for example water to be heated, which circulates directly within the panels 5, for sanitary use or for heating, or to transfer it, by means of a fluid which circulates in a suitable heat exchanger, to an accumulation tank in order to be able to use the received energy even in winter months, again for example to heat water for domestic uses.

Conveniently, regardless of the choice of the type of panel 5, the awning 1 according to the invention comprises at least one gutter, which is fixed to the fixed structure 2, for collecting and draining rainwater, which is conveyed along said preset directions.

The operation of the awning 1 according to the invention is evident from what has been described and illustrated and in particular it is evident that the provision of the covering of the canopy 4 by means of a suitable number of mutually spaced panels 5 allows convenient packing of the canopy 4 and effective elimination of rainwater. The presence of the longitudinal passages 6 in fact allows to have a privileged path for the guided draining of rainwater. The transverse gaps 7 comprised between two rows of panels 5 arranged side-by-side and fixed in an upper region to the same transverse portion 4a allow the latter to fold onto them in order to pack the canopy 4 completely if it is not being used.

In practice it has been found that the awning according to the invention fully achieves the intended aim and objects, since the covering of the canopy 4 by means of panels 5 in order to recover and convert received solar energy does not compromise the possibility to slide and fold the awning 1 when desired and there are no dangers of unwanted lateral dripping of rainwater.

The invention thus conceived is susceptible of numerous modifications and variations, all of which are within the scope of the appended claims; all the details may further be replaced with other technically equivalent ones.

In the exemplary embodiments shown, individual characteristics, given in relation to specific examples, may actually be interchanged with other different characteristics that exist in other exemplary embodiments.

Moreover, it is noted that anything found to be already known during the patenting process is understood not to be claimed and to be the subject of a disclaimer.

In practice, the materials used, as well as the dimensions, may be any according to requirements and to the state of the art.

Where technical features mentioned in any claim are followed by reference signs, those reference signs have been included for the sole purpose of increasing the intelligibility of the claims and accordingly such reference signs do not have any limiting effect on the interpretation of each element identified by way of example by such reference signs.

## Claims

1. An outdoor awning with panels for using solar energy, comprising a fixed supporting structure (2) for a plurality of cross-members (3) which can move longitudinally along guides formed within said fixed structure (2) in order to open and close the awning (1), each of said cross-members (3) being rigidly connected to the lower face of a canopy (4), **characterized in that** said canopy (4) comprises a plurality of transverse portions (4a), each of said transverse portions (4a) being delimited by a pair of said consecutive cross-members (3) and being associated with a plurality of panels (5) which are exposed to sunlight in order to receive the radiation and convert it into energy of another kind, said awning (1) comprising areas of discontinuity, on each of said transverse portions (4a), so as to mutually space said panels (5) in order to allow the folding of said canopy (4), the upper face of said canopy (4), with said awning (1) in the open configuration, allowing the draining of rainwater along preset directions.

2. The outdoor awning according to claim 1, **characterized in that** said panels (5), in each of said transverse portions (4a), are mutually aligned along at least two transverse rows, are arranged substantially so as to cover in an upper region said canopy (4), and are mutually spaced so as to form longitudinal passages (6) in order to constitute a channel for draining rainwater and transverse gaps (7), said areas of discontinuity being constituted by said transverse gaps (7), each of said transverse portions (4a) folding along said transverse gaps (7) in order to close said awning (1).

3. The outdoor awning according to claim 1, **characterized in that** said canopy (4) is thicker than said panels (5), said panels (5) being substantially embedded within said canopy (4), the upper surface of each of said panels (5) and the upper face of said canopy (4) being coplanar.

4. The outdoor awning according to one or more of the preceding claims, **characterized in that** it comprises a deformable sheet-like element which is at least partially transparent, said canopy (4) and said panels (5) being covered in an upper region by means of said sheet-like element.

5. The outdoor awning according to claim 1, **characterized in that** each of said panels (5) comprises a photovoltaic module for receiving solar energy and converting it into electric power by means of the photovoltaic effect.

6. The outdoor awning according to claim 5, **characterized in that** each of said modules has a variety of photovoltaic cells (5a), which are mutually connected electrically, each of said photovoltaic cells (5a) comprising a double layer of semiconductor material which is connected electrically to an external conductor.

7. The outdoor awning according to claim 6, **characterized in that** said semiconductor material is constituted by monocrystalline silicon.

8. The outdoor awning according to claim 6, **characterized in that** said semiconductor material is constituted by polycrystalline silicon.

9. The outdoor awning according to claim 6, **characterized in that** said double layer is constituted by a thin film of semiconductor material.

10. The outdoor awning according to claim 9, **characterized in that** said semiconductor material is constituted by amorphous silicon.

11. The outdoor awning according to one or more of the preceding claims, **characterized in that** each of said modules of each of said transverse portions (4a) is connected electrically to the others so as to form a photovoltaic generator for a photovoltaic system.

12. The outdoor awning according to claim 1, **characterized in that** each of said panels (5) is constituted by a thermal solar panel for receiving solar energy and converting it into heat energy, in order to transfer it to a different user element.

13. The outdoor awning according to claim 1, **characterized in that** it comprises at least one gutter, which is fixed to said fixed structure (2) in order to collect and drain the rainwater conveyed along said preset directions.
